# EUROPEAN PATENT SPECIFICATION

(11) **EP 2 817 832 B1**
(45) Date of publication and mention of the grant of the patent: **25.05.2016**
(21) Application number: 12714065.5
(22) Date of filing: 23.02.2012
(51) Int. Cl.: H01L 31/04, H02S 30/20

(54) **COVERING SYSTEM FOR WINDOWS OR BUILDING FACADES COMPRISING PHOTOVOLTAIC MODULES, IN PARTICULAR DSSC PHOTOVOLTAIC MODULES**
ABDECKSYSTEM FÜR FENSTER ODER GEBÄUDEFASSADEN MIT FOTOVOLTAIKMODULEN, INSBESONDERE DSSC-FOTOVOLTAIKMODULEN
SYSTÈME DE REVÊTEMENT POUR FENÊTRES OU FAÇADES DE BÂTIMENT COMPRENANT DES MODULES PHOTOVOLTAÏQUES, EN PARTICULIER DES MODULES PHOTOVOLTAÏQUES DSSC

(43) Date of publication of application: 31.12.2014
(73) Proprietor: Turina, Alessandro, 00124 Roma (IT)
(72) Inventor: Turina, Alessandro, 00124 Roma (IT)
(74) Representative: Iannone, Carlo Luigi
(86) International application number: PCT/IT2012/000054
(87) International publication number: WO 2012/114364

(56) References cited:
- EP-A1- 2 378 565
- EP-A2- 0 338 362
- DE-A1-102008 011 908
- GB-A- 2 466 587
- US-A- 4 636 579
- US-A1- 2010 307 554

## Description

The present invention refers to a covering system for building windows or facades comprising photovoltaic modules, in particular DSSC photovoltaic modules, with such characteristics to allow light energy shielding/capturing effect to be obtained.

More specifically, the invention refers to the structure of a covering system of said type comprising a multiplicity of photovoltaic modules, in particular DSSC photovoltaic modules, and it is configured in such way to be opened and closed as a bellows.

Below the description will be referred to a covering system comprising DSSC photovoltaic modules, but it is obvious that the same does not have to be considered as limited to this specific embodiment.

As to DSSC photovoltaic modules, each thereof comprises one or more photoelectrochemical cells or DSSC cells (*dye*-*sensitized solar cells*), i.e. organic dye solar cells. Said DSSC cells are photovoltaic cells taking advantage of a physical principle similar to that of chlorophyllian photosynthesis to convert diffused light energy in electric energy. In fact, an organic pigment is excited by sunlight in order to generate an electron flow. In particular, a DSSC cell sequentially comprises:
- a first conductive substrate or anode,
- a semiconductor layer of nanocrystals, typically a TiO₂ layer,
- an active material consisting of a photosensitive organic dye, molecules thereof being disposed on the surface grains of said semiconductor layer,
- an electrolyte, typically in liquid form and iodine based, and
- a second conductive substrate or cathode.

Each substrate consists of transparent material, preferably glass, the semiconductor layer is disposed using a *screen printing* technique on the first conductive substrate, and organic dye molecules are placed on the surface of TiO₂ semiconduct layer.

When sunlight strikes a DSSC cell, said sunlight enters through the transparent electrode, striking dye placed on TiO₂ surface.

The dye is excited and one electron thereof directly is transferred from dye molecule directly into conduction band of TiO₂ semiconductor layer, by tunnelling effect, dye remaining in oxidation state. In turn said electron is transferred from TiO₂ semiconductor layer to the first conductive substrate and therefrom to an electric circuit wherein it can produce a useful work. At last, the electron pathway ends on the second conductive substrate.

Currently window covers are known.

For prior art relevant for the present invention, see e.g. UK patent application GB 2 466 587 A (VOROBJOVS ARTJOMS [GB]) 30 June 2010 (2010-06-30) and Patent application EP 2 378 565 A1 (GEN ELECTRIC [US]) 19 October 2011 (2011-10-19).

Further, a known type cover is described in German Patent Application DE 10 2008 011 908.

This cover is used in order to darken an area or a room, and consists of a multiplicity of each to other separated solar cell modules, each thereof being fixed on a curtain, particularly on the curtain side towards the sun in order to transform the solar energy in electrical energy. Each module has a first extremity fixed at a rod, and a second free extremity, opposite to said first extremity, and said module is free to rotate around itself. Said modules pass from a resting configuration, wherein they are parallel and substantially contact with each other, to an operating configuration, wherein they are adjacent to each other and aligned. Passing from resting to operating configuration all the modules are caused to slide horizontally along said rod and rotated along the same direction by a same angle.

However, said cover has some disadvantages.

A first disadvantage is that, when said cover is outdoor applied, both cover constituting solar cell modules and curtain the same are applied on, are subjected to atmospheric agent activity, thus resulting in deterioration thereof. For example under windy conditions, said solar cell modules can hit each other with damaging risk. This occurs when solar cell modules are both flexible and rigid type having second free extremity.

Moreover, a further disadvantage results from the fact that the movement of said cover is limited only to movement along an horizontal axis.

Another disadvantage is that this cover transforms in electric energy only sun light.

An additional disadvantage is that, where the cover is in operating configuration, it prevents the sunlight from entering into the room, so that the same is darkened.

A further example of known type cover is described in US Patent Application US 2010 0307554.

This cover consists of a pack curtain made of an upper frame and supporting material consisting of section multiplicity whereon flexible solar panels are fixed in order to transform solar energy in electric energy. Said curtain changes from a resting configuration, wherein said curtain is packaged in correspondence of upper side of a window, each section being placed under each preceding section thus only the upper frame fixed section is visible, to an operating configuration wherein said curtain is extended from the upper to the lower window side, each section being side by side placed. Particularly, the supporting material is darkening and the passage from one configuration to the other occurs by means of two curtain sided cords assuring the simultaneous movement of individual sections.

However, also this cover displays some disadvantages.

A first disadvantage of said cover is that, where one or more solar panels must be replaced, such replacement is not easy and the curtain they are fixed on can be torn. Therefore, it is easier to replace curtain thus resulting in cost and time wasting.

A second disadvantage is that, where curtain is in operating configuration, i.e. curtain, being extended down, prevents sunlight from passing into the room, so that the same is darkened.

Moreover, a further disadvantage is that it is necessary to provide for a lower element stabilizing curtain by gravity, limiting the movement of said curtain only around a vertical axis.

Moreover, said curtain is not suitable to outdoor use as there is not provided fixing means stabilizing the same, when subjected to wind force.

An object of the present invention is to overcome said disadvantages, by supplying a covering system for building windows or facades, comprising a multiplicity of photovoltaic modules, in particular DSSC photovoltaic modules, which are easy to be produced and cost effective, with a double function, i.e. to shield an indoor room from sunlight thus improving the global bioclimatic behaviour of said room and at the same time capture light energy, coming both from sunlight and artificial light occurring within said internal room, in order said light energy to be transformed in electric energy.

The invention is defined by claim 1.

It is therefore the object of the invention a covering system for building windows or facades comprising at least a modular element, wherein said modular element comprises a multiplicity of photovoltaic modules, in particular DSSC photovoltaic modules, each thereof comprises at least a cell and at least a substrate consisting of rigid and transparent material. Said photovoltaic modules are disposed sequentially and hinged to each other by hinging means, such that the same can be moved from a first closed position, wherein said photovoltaic modules are mutually bellows folded, to a second opened position, wherein said photovoltaic modules are substantially mutually side by side placed and substantially aligned, or vice versa. In particular, said modular element comprises first and second guide means in order said photovoltaic modules to be guided from said first to said second position, wherein said first and second guide means are arranged respectively on a first and second supporting element..

According to the invention, said modular element can comprise a jamb provided with a rod lodging seat, and a photovoltaic module positioned at an extremity of said photovoltaic modules sequence can be coupled to said rod by means of two arms, having a first extremity pivotally coupled to said rod, and a second extremity pivotally coupled to said ending photovoltaic module.

In particular, each photovoltaic module can be provide with at least a respective hinge slidingly engaging said first guide means, and at least a respective carriage or sliding cursor on said second guide means.

Moreover, said hinging means can comprise at least an hinge and preferably a pair of hinges, each thereof is bridged between two edges of two contiguous photovoltaic modules.

It Is preferable that each photovoltaic module comprises bypass means in order a darkened or damaged photovoltaic module to be bypassed by electrical current. Said bypass means can comprise at least a bypass diode.

It is further preferable that each photovoltaic module comprises UV filtering means in order UV radiations to be filtered.

In particular, said first guide means can comprise a groove guide, and said second guide means can comprise an eyelet.

Each sliding cursor on said second guide means can be engaged by engaging means to a respective photovoltaic module. Said engaging means can be also electrically connecting means in order electrical current passage to be allowed from a photovoltaic module to at least a lead.

Advantageously said first and/or said second supporting element is/are provided with a cavity in order said one or more leads to be lodged therein.

Further advantageously, said covering system can comprise a multiplicity of modular elements, interconnected to each other along a vertical and/or horizontal axis.

Where covering system comprises at least further modular element connected to said modular element along a vertical axis, according to a first alternate embodiment, said further modular element can be coupled to said modular element in way such that the first supporting element of said further modular element is coupled to second supporting element of said modular element or that second supporting element of said further modular element is coupled to the first supporting element of said modular element.

According to a second alternate embodiment, it is possible to provide that the first and/or second supporting element of said modular element can be equipped with additional guide means and the covering system comprises at least a further modular element inferiorly and/or superiorly coupled to said modular element by means of said additional guide means.

Where the covering system comprises at least an additional modular element connected to said modular element along an horizontal axis, according to a first alternate embodiment, the jamb of said modular element can be coupled to the jamb of said additional modular element.

According to a second alternate embodiment, the jamb of said modular element can comprise an additional seat for the lodging of a respective coupled rod, by means of two arms, to an ending photovoltaic module of said additional modular element, where each arm has a first extremity pivotally coupled to said rod, and a second extremity pivotally coupled to said ending photovoltaic module.

The combination of one of the alternatives relating to a covering system having a multiplicity of modular elements connected along a vertical axis with one of the alternatives relating to a covering system having a multiplicity of connected modular elements along a horizontal axis allows the covering system to have any extension along such axes so to be adapted to any dimensions of building windows or facades.

The present invention now will be described, by an illustrative, but not limitative way, according to an embodiment thereof, with particular reference to the enclosed figures, wherein:
figure 1 is an exploded view of a covering system comprising DSSC photovoltaic modules, i.e. the object of the invention;
figure 2 is a partial elevation view of figure 1 covering system ;
figures 3A-3B show a frontal and elevation views, respectively, of figure 1 covering system applied on a building window, in opened position;
figures 4A-4B show a frontal and elevation views, respectively of figure 1 covering system applied on a building window, in closed position;
figure 5A is a perspective view of the upper portion of figure 1 covering system from which a part of section has been removed in order a guide eyelet and sliding carriages thereon to be shown, DSSC photovoltaic modules being fixed thereto;
figure 5B schematically shows a partial lateral view of figure 1 covering system, said view being partially sectioned;
figure 6 is an elevation view of figure 1 covering system, said view being partially sectioned;
figure 7 schematically shows an elevation of the covering system in a middle position between and closed position;
figure 8 shows an electrical circuit with reference to the figure 7 covering system and wherein each DSSC photovoltaic module is provided with a bypass diode;
figure 9 is a frontal view of a multiplicity of cascade mounted covers, along a vertical axis, each thereof being applied on a building respective window and in opened position;
figure 10 is a lateral view of figure 9, cascade mounted, building anchored covers;
figure 11 shows the anchoring system of two figure 8, cascade mounted covers;
figure 12 schematically shows a multiplicity of cascade mounted covers along an horizontal axis;
figure 13 is a frontal view of a multiplicity of cascade mounted covers along vertical axis and horizontal axis, each being applied on a respective building window in opened position;
figures 14A-14M show a *pattern* for DSSC cells to be used in a DSSC photovoltaic module, respectively.

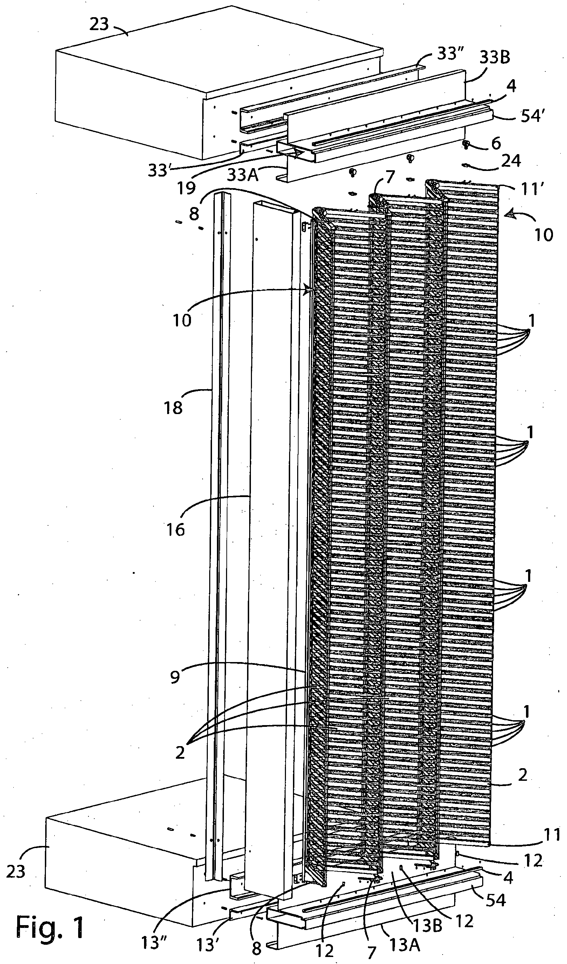

With particular reference to figure 1, a covering system to be applied outside on a building window is provided for.

Said covering system comprises a multiplicity of sequentially disposed DSSC photovoltaic modules 10, each thereof comprising a multiplicity of DSSC cells 1, and two rigid conductive substrates 2, each other facing, (only one thereof being visible in figure 1) said DSSC cells 1 being interposed therebetween.

In particular, each DSSC photovoltaic module 10 can be provided with UV filtering means in order UV radiations to be filtered. For example, two substrates 2 of each photovoltaic module 10 can be encapsulated in a transparent polymer material that behaves like UV radiation filtering means.

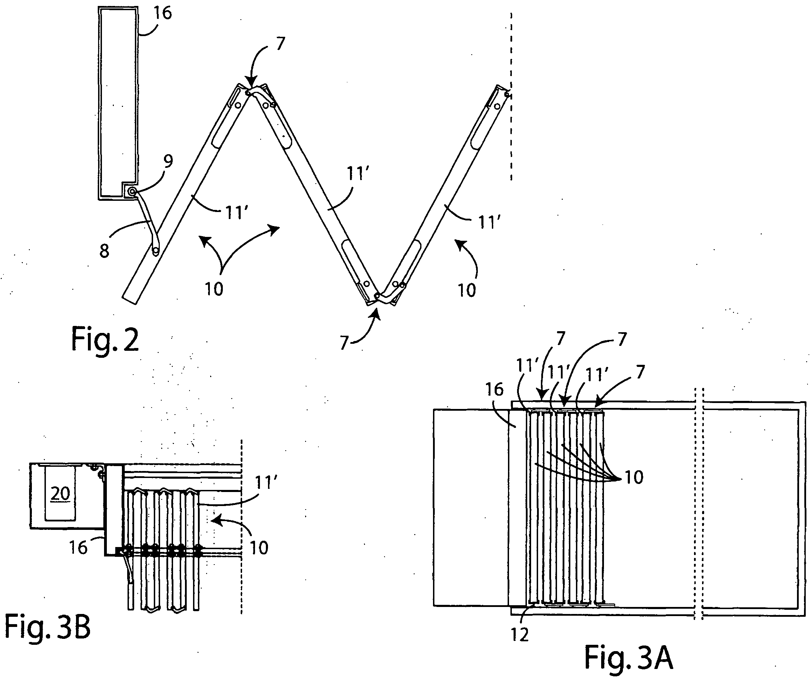

According to a peculiar characteristic of the invention, said DSSC photovoltaic modules 10 are hinged to each other by means of a hinge pair 7, each thereof being bridged between two edges of two contiguous DSSC photovoltaic modules 10 (figures 1 and 2). Although not shown in figures 1 and 3, it is possible to provide for a single hinge between a DSSC photovoltaic module and the next, or any hinge number, without departing from the scope of the invention.

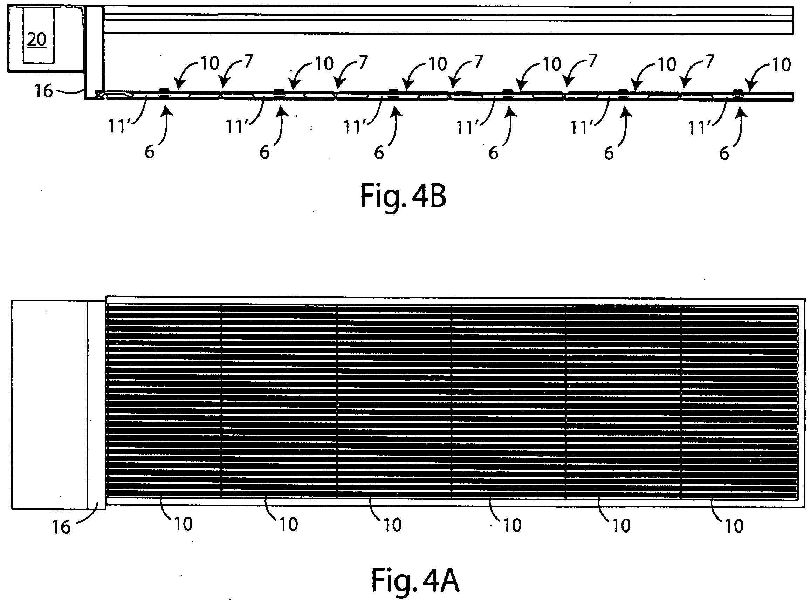

The fact that DSSC photovoltaic modules are mutually hinged allows DSSC photovoltaic modules to be stable and mobile from a closed position, wherein said DSSC photovoltaic modules 10 are folded on each other and substantially overlapping, i.e. bellows folded (figures. 3A-3B), to an opened position, wherein said DSSC photovoltaic modules 10 are placed side by side to each other and substantially aligned (figures. 4A-4B).

Moreover, the fact that DSSC photovoltaic modules 10 are rigid allows said DSSC photovoltaic modules to be stable under wind activity

As it is shown from 3A and 3B figures, the covering system in closed position, DSSC photovoltaic modules being window sided, has a minimal hindrance. On the contrary, figures 4A and 4B show the covering system in opened position disposed in parallel with the window it is applied on.

According to described embodiment, a DSSC photovoltaic module 10 positioned at an extremity of the sequence is coupled by means of two arms 8 to a rod 9, lodged in a mounting designed seat 16 assured to the building by means of "L" shaped section 18. Each of said arms 8 has a first extremity pivotally coupled to said rod 9, and a second extremity pivotally coupled to said ending DSSC photovoltaic module, in such a way to guarantee the simultaneous movement of said DSSC ending photovoltaic module 10 at lower and upper edges, respectively, and consequently of all successive DSSC photovoltaic modules 10.

According to the invention, the covering system comprises first 4 and second guide means 4' for DSSC photovoltaic modules 10 allowing said DSSC photovoltaic modules to slide horizontally, towards one or the opposite direction, and to pass easily from the closed to the opened position or vice versa.

In particular, said first guide means 4 comprises a groove guide, fixed at first lower section 54, and each DSSC photovoltaic module 10 is equipped with an hinge 12 that is engaged slidingly in said groove guide. Each hinge 12 is fixed on the lower edge of a respective DSSC photovoltaic module 10.

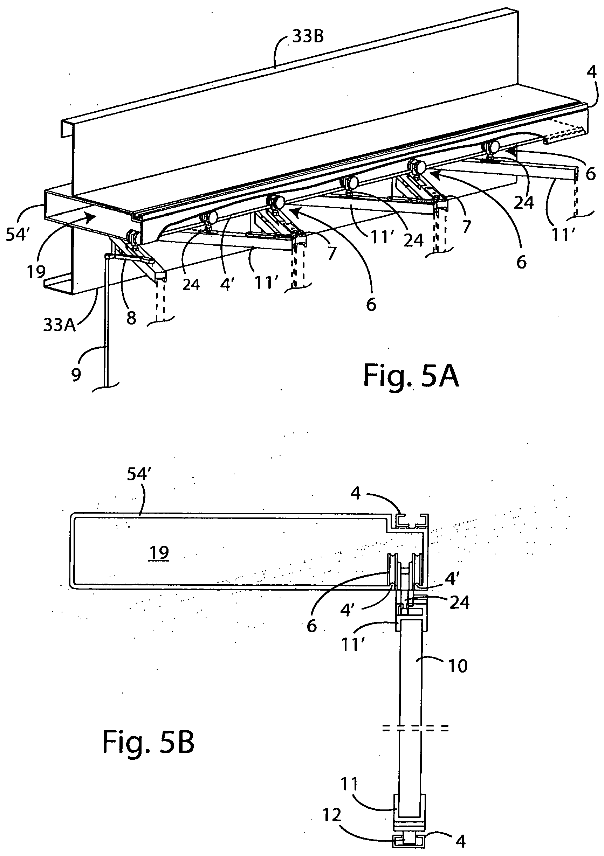

Said second guide means 4' comprises a eyelet designed on a second upper section 54', bridged thereon there are sliding cursors or carriages 6, each engaged by engaging means 24 to a respective upper edge of a DSSC photovoltaic module 10 (figures. 5A-5B). Said engaging means 24 can also act as electrical connection, allowing the passage of electrical current from a DSSC photovoltaic module to a lead (not shown) connected to an inverter 20.

Said first 54 and said second 54' section are fixed on board beams 23 by means of one or more purposely shaped sections.

In particular, with reference to figure 1, first 54 and second 54' section are fixed to board beams 23 by means of two respective section anchorage pairs, each consisting of a first "L" shaped and a second "C" shaped section, respectively a first pair 13', 13" and a second pair 33', 33" of anchorage sections.

In addition, a first substantially "L" shaped sheet in the lower part, respectively 13A and 33A, and a second substantially "L" shaped sheet in the upper part, respectively 13B and 33B, are fixed to each of said sections 54, 54' in order to hide the anchorage section pairs.

In particular, the second sheets 13B and 33B are shaped in such a way to have a slope in order the water can flow externally.

According to the invention, each DSSC photovoltaic module 10 a "C" shaped section pair 11 and 11' is provided for, a first section 11 disposed on the lower edge and a second section 11' disposed on the upper edge (figure 5B), in such a way that the ending portions, lower and upper, of two rigid substrates 2 of DSSC each photovoltaic module 10 are enclosed inside of a respective "C" shaped section. In particular, the engaging means 24 is fixed on second section 11' and hinges 12 are engaged on first section 11.

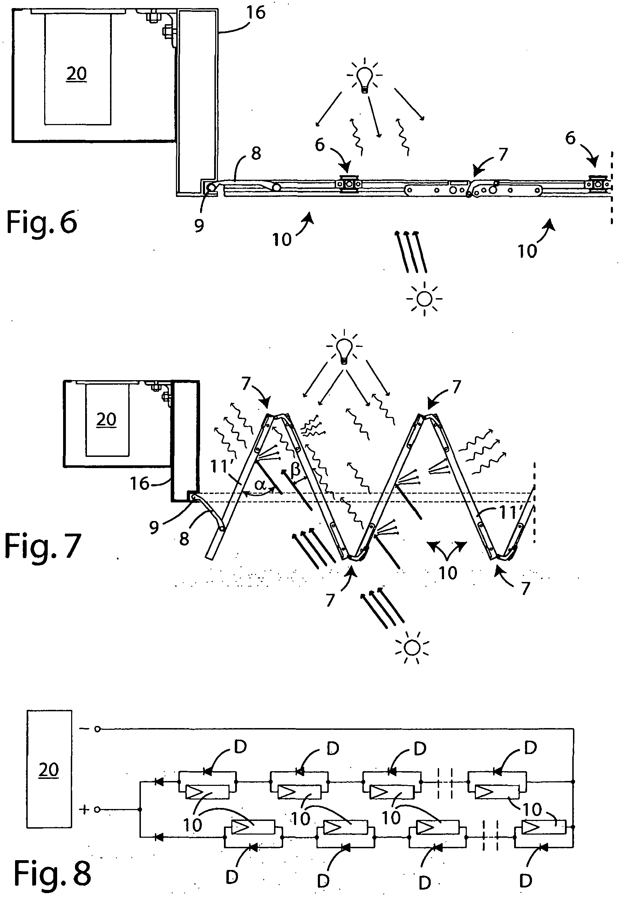

According to the invention, advantageously, when the covering system is in an opened position, said covering system is suitable to capture both the sunlight and indoor room coming artificial light (figure 6). In particular, part of sunlight is absorbed by said DSSC photovoltaic modules 10 and transformed in electric energy, and part penetrates in the indoor room, passing trough DSSC photovoltaic modules 10, so that said ambient can be shaded. The structure of the covering system does not allow said indoor room to be completely darkened.

The fact that DSSC photovoltaic modules are rigid and mutually hinged, allows the covering system to be also in any intermediate position between the opened position and closed position. Advantageously, also in an intermediate position, the covering system is suitable to capture both the sunlight and indoor room coming artificial light, allowing a part of sunlight penetrates into indoor room (figure 7). In such intermediate position, DSSC photovoltaic modules 10 of the covering system are disposed in such a way that alternatively α and β angles with sunlight are formed.

Particularly, as it is shown in figure 7, ending DSSC photovoltaic module 10, forming α angle with the trajectory of solar radii, absorbs a part of sun directly coming light, while another part of light penetrates in the indoor room by passing through, and an ulterior part of light is reflected by said ending module and strikes adjacent DSSC photovoltaic module, forming a β angle with the trajectory of the solar radii. The latter, in turn, absorbs a part of light penetrated in the indoor room having passed through another DSSC photovoltaic module, while another part of light is reflected in the indoor room, and an additional part of light strikes the ending photovoltaic module, after the passage therethrough.

In addition, according to the invention, each DSSC 10 photovoltaic module comprises bypass means (not shown in figure 7) in order to allow the electrical current to by pass a DSSC photovoltaic module where the latter is damaged or completely shadowed. For example, each DSSC photovoltaic module can be provided with at least a bypass diode.

Figure 8 shows an electrical circuit where each DSSC photovoltaic module 10 is equipped with bypass means D comprising a bypass diode, and wherein DSSC photovoltaic modules tilted by a angle are connected in series to each other and in parallel with DSSC photovoltaic modules tilted by β angle again connected in series to each other. Said DSSC photovoltaic modules 10 are connected to the inverter 20.

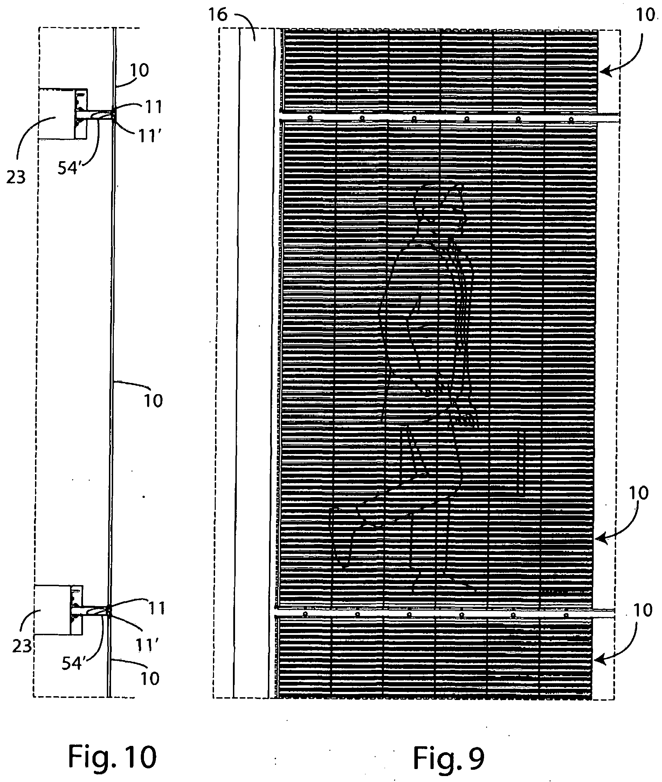

With particular reference to figure 9, three mutually overlapped windows are schematically shown, a respective covering system being applied on each.

In particular, each covering system is in opened position and cascade mounted with respect to another.

Although in figure 9 three cascade disposed covering systems are shown schematically, any number of covering systems can be cascade mounted without departing from the scope of the invention.

As it is apparent from figure 9, although a covering system is in an opened position, it is possible to see a person beyond the window. In fact, DSSC photovoltaic modules 10 of the covering system do not darken the indoor room, as for example an apartment room, but overshadow it and this results from the fact that DSSC photovoltaic modules 10 are transparent in correspondence of the portions of substrates 2 not occupied by DSSC cells 1.

In figure 10 a lateral view of three cascade mounted covers assured to the building by means of an anchorage system is shown.

In order to cascade arrange a cover multiplicity, on second section 54' of each covering system further guide means 4 is provided for.

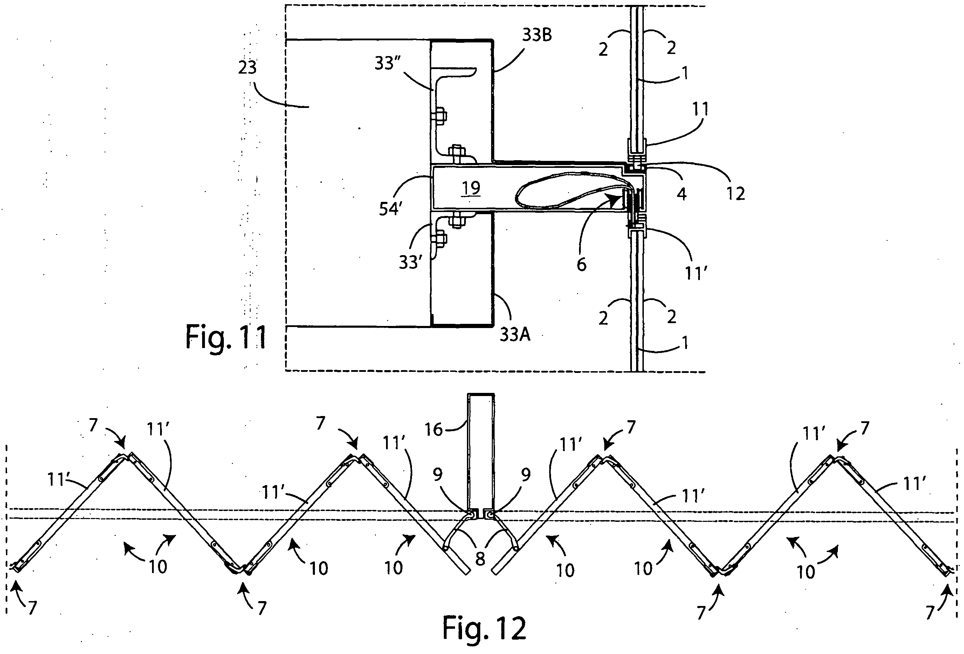

After a first covering system has been assembled and additional guide means 4 on second section 54' of said first cover has been provided for it is possible a second cover with DSSC photovoltaic modules 10 slidingly engaged, by hinges 12, with said first guide means disposed on said second section 54' of said first covering system (figure 11) to be assembled.

Analogously in order to cascade arrange with respect to said second covering system a third covering system, DSSC photovoltaic modules 10 of said third covering system are slidingly engaged, by hinges 12, with additional guide means 4 disposed on the second section 54' of said second covering system.

In addition, figure 11 shows also the anchorage system by means of which two cascade mounted covers are anchored to a building. In particular, second hollow section 54' of a first covering system is fixed to a board beams 23 by means of the first "L" shaped 33' and the second "C" shaped section 33" disposed on the opposite sides of said second hollow section 54'.

Advantageously, the fact that the second section 54' is provided with a cavity 19 allows the lodging or passage of one or more leads, for example leads (not shown) connecting DSSC photovoltaic modules 10 to an inverter 20.

Figure 12 shows two covering systems coupled on same jamb 16, having a first and a second seats for the lodging of a respective rod 9 connected, by two arms 8, to a respective ending DSSC photovoltaic module of a respective DSSC photovoltaic module sequence. Said second seat is positioned on the side of the section opposite the first seat is designed to be on.

According to another embodiment (not shown) it is possible to design two coupled jambs 16, each provided with a respective seat for the lodging of a respective rod 9, on each of which a DSSC ending photovoltaic module of a respective DSSC photovoltaic module sequence is at ledge position.

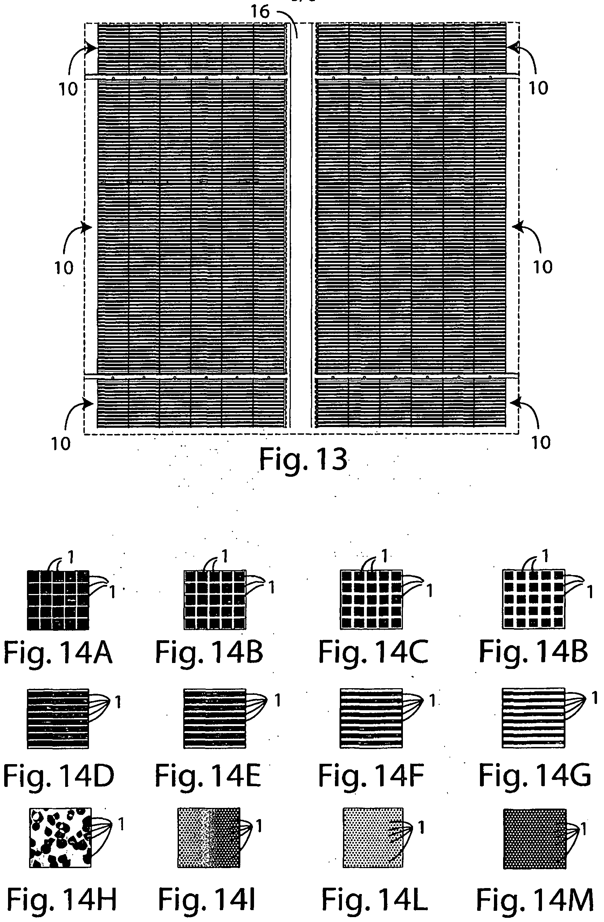

Figure 13 shows three pairs of covering system of figure 12, wherein each pair is cascade mounted on another pair, and DSSC photovoltaic modules of each pair are in an opened position.

According to the described embodiment, each DSSC photovoltaic module has a rectangular cross-section. However, although not shown in figures, said DSSC photovoltaic modules 10 can display various shapes and dimensions, and each DSSC photovoltaic module can even consist of two or more mutually connected DSSC photovoltaic modules, without departing from the scope of the invention.

In addition although according to described embodiment said photovoltaic modules are horizontally sliding, alternatively said DSSC photovoltaic modules can slide vertically, from top down or vice versa, displaying the same advantages. Moreover, this covering system, by arrangement of described guide means, can slide along any axis in the space, not being necessarily an horizontal or vertical axis, again with the same advantages.

Further DSSC 1 cells according to described embodiment have a rectangular cross-section. However, also said DSSC cells can have various shapes and dimensions, without departing from the scope of the invention. In fact, as shown in figures 14A-14M, it is possible to provide for a multiplicity of *pattern* and colorations for DSSC cells 1 of photovoltaic modules 10.

Depending on selected *pattern* type it is possible to establish for each single DSSC photovoltaic module a predetermined opaque shielding/light energy capturing to transparent surface ratio.

The covering system up to here described is manually operated by an user.

However, although not shown in the figures, said covering system can be motorized and connected to an home automation control system such that opening and closing operation of said covering system is automated, thus optimizing the energetic efficiency and bioclimatic behaviour of an apartment or entire building. At this end, for example, it is possible to provide for a motor connected by means of a cable or belt to a DSSC photovoltaic module 10 disposed to the extremity of the sequence with a free end, and a return pulley.

Advantageously, as already mentioned, the covering system being in opened or intermediate position and in the sun presence, DSSC photovoltaic modules both absorb sunlight and externally shield a room from the same sunlight, such that said room is overshadowed. In particular, depending on DSSC photovoltaic module type, shadowing degree inside of a room is adjustable. In fact, it is possible to obtain a wide shadowing range, depending on pattern and coloration of DSSC cells used in DSSC photovoltaic modules. Therefore, once established the capturing to transparent surface ratio for each DSSC photovoltaic module, it is possible to optimize the performances of DSSC photovoltaic modules depending on the place wherein the covering system is installed.

Another advantage; as already mentioned, results from the fact that the covering system which is the object of the invention allows in any given intermediate position a greater sunlight amount than known covering systems to be captured.

Additionally from an aesthetic point of view, the possibility to choose from a multiplicity of *patterns* and colorations of DSSC cells, results in that a building facade said covering system is applied on displays a pleasant aesthetic view.

Under cloudy weather conditions, on the other hand, said covering system is in closed position, with DSSC photovoltaic modules on each other folded at a side of the window, allowing low natural light to enter inside of a room, and improve the bioclimatic behaviour, in addition electric energy in order to illuminate internal room being saved too.

In other words the covering system, which is the object of the invention, can be used, if required, like an external *brise-soleil* in order building facades or rooms to be protected from direct sunlight aiming to avoid excessive heat occurrence and at the same time transforming solar energy in electric energy thanks to component DSSC photovoltaic modules.

Another advantage is that the inventive covering system can be applied on the windows or facades of both pre-existing and new buildings.

An ulterior advantage is that said covering system can be sized in order to be adapted to any window or façade type. In fact, it is sufficient to add one or more DSSC photovoltaic modules, connecting the same to those already composing the covering system, or remove one or more photovoltaic modules from the same covering system.

Still another advantage is that, in case of malfunctioning or aging of one or more DSSC photovoltaic modules of the covering system, an user can easily remove said one or more DSSC photovoltaic modules, and replace the same with other more efficient DSSC photovoltaic modules in order to restore or increase the efficiency of the covering system.

At last, a further advantage is that DSSC photovoltaic modules of said covering system can be cleaned easily by the user using a water jet or a cloth.

The same advantages, apart from possible obtainable colorations with DSSC cells, can be obtained with a covering system comprising photovoltaic modules other than DSSC photovoltaic modules, comprising at least a cell and at least a substrate of rigid and transparent material.

## Claims

1. Covering system for building windows or facades
which comprises at least a modular element, said modular element comprising a multiplicity of photovoltaic modules (10), in particular DSSC photovoltaic modules, each photovoltaic module (10) comprising at least a cell (1) and at least a substrate (2) made of rigid and transparent material, wherein
said photovoltaic modules (10) are disposed sequentially and are hinged to each other by hinging means (7), such that the same can be moved from a first closed position, wherein said photovoltaic modules (10) are mutually bellows folded, to a second opened position, wherein said photovoltaic modules (10) are substantially mutually side by side placed and substantially aligned, or vice versa, wherein said hinging means (7) comprises a pair of hinges, each thereof being bridged between two edges of two contiguous photovoltaic modules (10), and wherein
said modular element comprises first (4) and second (4') guide means in order said photovoltaic modules (10) to be guided from said first and said second position; said first (4) and said second (4') guide means being disposed respectively on a first (54) and second supporting element (54').

2. Covering system according to preceding claim, **characterized in that** said modular element comprises a jamb (16) provided with a rod lodging seat, and **in that** a photovoltaic module (10) positioned at an extremity of said photovoltaic module sequence is coupled to said rod (9) by means of two arms (8), having a first extremity pivotally coupled to said rod (9), and a second extremity pivotally coupled to said ending photovoltaic module.

3. Covering system according to any of preceding claims, **characterized in that** each of said photovoltaic modules (10) is provided with at least one respective hinge (12) slidingly engaging said first guide means (4), and at least a respective carriage or sliding cursor (6) on said second (4') guide means.

4. Covering system according to any of preceding claims, **characterized in that** each photovoltaic module (10) comprises bypass means (D) in order a darkened or damaged photovoltaic module to be bypassed by electrical current.

5. Covering system according to any of preceding claims, **characterized in that** said bypass means (D) comprises at least a bypass diode.

6. Covering system according to any of preceding claims, **characterized in that** each photovoltaic module (10) comprises UV filtering means in order UV radiations to be filtered.

7. Covering system according to any of preceding claims, **characterized in that** said first guide means (4) comprises a groove guide and **in that** said second (4') guide means comprises an eyelet.

8. Covering system according to any of claims 3-7, **characterized in that** each cursor (6) is engaged by engaging means (24) to a respective photovoltaic module (10).

9. Covering system according to preceding claim, **characterized in that** said engaging means (24) is electrical connecting means in order to allow the passage of electrical current from a photovoltaic module (10) to at least a lead.

10. Covering system according to any of preceding claims, **characterized in that** said first (54) and/or said second (54') supporting elements is/are provided with a cavity in order one or more lead to be lodged.

11. Covering system according to any of claims 1-10, **characterized in that** comprises at least an additional modular element and **in that** the first (54) or second (54') supporting elements of said additional modular element is coupled respectively to second (54') or first (54) supporting element of said modular element.

12. Covering system according to any of claims 1-10, **characterized in that** the first (54) and/or second (54') supporting elements of said modular element is/are provided with additional guide means (4', 4) and **in that** it comprises at least a further modular element inferiorly and/or superiorly coupled to said modular element by means of said additional guide means (4', 4).

13. Covering system according to any of claims 2-12, **characterized in that** comprises a further modular element and **in that** the jamb (16) of said modular element is coupled to the jamb of said further modular element.

14. Covering system according to any of claims 2-12, **characterized in that** comprises a further modular element and **in that** the jamb (16) of said modular element comprise an additional seat for the lodging of a respective rod (9) coupled, by means of two arms (8), to an ending photovoltaic module of said additional modular element; each of said arms having a first extremity pivotally coupled to said rod (9), and a second extremity pivotally coupled to said ending photovoltaic module.

## Patentansprüche

1. Abdecksystem für Gebäudefenster oder Fassaden, das mindestens ein modulares Element aufweist, wobei das modulare Element eine Vielzahl von Photovoltaikmodulen (10) aufweist, insbesondere DSSC-Photovoltaikmodule, wobei jedes Photovoltaikmodul (10) mindestens eine Zelle (1) und mindestens ein Substrat (2) aufweist, das aus einem starren und transparenten Material hergestellt ist, wobei
die Photovoltaikmodule (10) hintereinander angeordnet und miteinander mittels Gelenkmitteln gelenkig verbunden sind, so dass diese bewegt werden können aus einer ersten geschlossenen Stellung, in der die Photovoltaikmodule (10) wechselseitig balggefaltet sind, in eine zweite geöffnete Stellung, in der die Photovoltaikmodule (10) im Wesentlichen wechselseitig Seite-an-Seite angeordnet und im Wesentlichen ausgerichtet sind oder umgekehrt, wobei die Gelenkmittel (7) ein Paar von Gelenken umfassen, von denen jedes eine Brücke bildet zwischen zwei Kanten von zwei angrenzenden Photovoltaikmodulen (10), und wobei
das modulare Element ein erstes (4) und ein zweites (4') Führungsmittel aufweist, um die Photovoltaikmodule (10) aus der ersten in die zweite Stellung zu führen, wobei das erste (4) und das zweite (4') Führungsmittel an einem ersten (54) bzw. einem zweiten Halteelement (54') angeordnet ist.

2. Abdecksystem gemäß dem vorangehenden Anspruch, **dadurch gekennzeichnet, dass** das modulare Element einen Pfosten (16) aufweist, der mit einem Stabaufnahmesitz versehen ist, und dass ein an einem Ende der Abfolge von Photovoltaikmodulen angeordnetes Photovoltaikmodul (10) mit dem Stab (9) mittels zweiter Arme (8) verbunden ist, die ein erstes Ende haben, das schwenkbar mit dem Stab (9) verbunden ist, und ein zweites Ende, das schwenkbar mit dem Ende des Photovoltaikmoduls verbunden ist.

3. Abdecksystem gemäß einem der vorangehenden Ansprüche, **dadurch gekennzeichnet, dass** jedes der Photovoltaikmodule (10) mit mindestens einem jeweiligen Gelenk (12) versehen ist, das verschiebbar in das erste Führungsmittel (4) eingreift, und mindestens einen jeweiligen Schlitten oder einen Gleitzeiger (6) auf den zweiten Führungsmitteln (4').

4. Abdecksystem gemäß einem der vorangehenden Ansprüche, **dadurch gekennzeichnet, dass** jedes Photovoltaikmodul (10) ein Bypass-Mittel (D) aufweist, damit ein abgedunkeltes oder beschädigtes Photovoltaikmodul von elektrischem Strom umgangen werden kann.

5. Abdecksystem gemäß einem der vorangehenden Ansprüche, **dadurch gekennzeichnet, dass** das Bypass-Mittel (D) mindestens zwei Bypass-Dioden aufweist.

6. Abdecksystem gemäß einem der vorangehenden Ansprüche, **dadurch gekennzeichnet, dass** jedes Photovoltaikmodul (10) UV-Filtermittel aufweist, um UV-Strahlung zu filtern.

7. Abdecksystem gemäß einem der vorangehenden Ansprüche, **dadurch gekennzeichnet, dass** das erste Führungsmittel (4) eine Nutführung aufweist, und dass das zweite Führungsmittel (4') eine Öse aufweist.

8. Abdecksystem gemäß einem der Ansprüche 3-7, **dadurch gekennzeichnet, dass** der Zeiger (6) durch Eingriffsmittel (24) in ein zugehöriges Photovoltaikmodul (10) eingreift.

9. Abdecksystem gemäß dem vorangehenden Anspruch, **dadurch gekennzeichnet, dass** das Eingriffsmittel (24) ein elektrisches Verbindungsmittel ist, um den Durchfluss von elektrischem Strom von einem Photovoltaikmodul (10) zu mindestens einer Leitung zu ermöglichen.

10. Abdecksystem gemäß einem der vorangehenden Ansprüche, **dadurch gekennzeichnet, dass** das erste (54) und/oder das zweite (54') Halteelement mit einem Hohlraum versehen ist, um eine oder mehrere Leitungen aufzunehmen.

11. Abdecksystem gemäß einem der Ansprüche 1-10, **dadurch gekennzeichnet, dass** es mindestens ein zusätzliches modulares Element aufweist und dass das erste (54) oder zweite (54') Halteelement des zusätzlichen modularen Elements mit dem zweiten (54') oder ersten (54) Halteelement des modularen Elements verbunden ist.

12. Abdecksystem gemäß einem der Ansprüche 1-10, **dadurch gekennzeichnet, dass** das erste (54) und/oder zweite (54') Halteelement des modularen Elements mit einem zusätzlichen Führungsmittel (4', 4) versehen ist, und dass es mindestens ein weiteres modulares Element aufweist, das untergeordnet und/oder übergeordnet mit dem modularen Element verbunden ist mittels des zusätzlichen Führungsmittels (4', 4).

13. Abdecksystem gemäß einem der Ansprüche 2-12, **dadurch gekennzeichnet, dass** es ein weiteres modulares Element aufweist, und dass der Pfosten (16) des modularen Elements mit dem Pfosten des weiteren modularen Elements verbunden ist.

14. Abdecksystem gemäß einem der Ansprüche 2-12, **dadurch gekennzeichnet, dass** es ein weiteres modulares Element aufweist, und dass der Pfosten (16) des weiteren modularen Elements einen zusätzlichen Sitz zur Beherbergung des jeweiligen Stabs (9) aufweist, der mittels zweier Arme (8) mit einem abschließenden Photovoltaikmodul des zusätzlichen modularen Elements verbunden ist, wobei jeder der Arme ein erstes Ende aufweist, das schwenkbar mit dem Stab (9) verbunden ist, und ein zweites Ende, das schwenkbar mit dem abschließenden Photovoltaikmodul verbunden ist.

## Revendications

1. Système de revêtement pour fenêtres ou façades de bâtiments, comprenant au moins un élément modulaire, ledit élément modulaire comprenant une multiplicité de modules photovoltaïques (10), en particulier des modules photovoltaïques DSSC, chaque module photovoltaïque (10) comprenant au moins une cellule (1) et au moins un substrat (2) réalisé en matériau rigide et transparent, lesdits modules photovoltaïques (10) étant disposés successivement et articulés les uns aux autres par des moyens d'articulation (7) de telle sorte que ceux-ci peuvent être déplacés à partir d'une première position fermée, dans laquelle lesdits modules photovoltaïques (10) sont mutuellement pliés en forme de soufflet, jusqu'à une seconde position ouverte, dans laquelle lesdits modules photovoltaïques (10) sont sensiblement disposés mutuellement côte à côte et sensiblement alignés, ou inversement, lesdits moyens d'articulation (7) comprenant une paire de charnières, chacune reliant deux bords de deux modules photovoltaïques (10) contigus, et ledit élément modulaire comprenant des premier (4) et second (4') moyens de guidage afin que lesdits modules photovoltaïques (10) soient guidés à partir de ladite première et de ladite seconde position ; lesdits premier (4) et second (4') moyens de guidage étant disposés respectivement sur un premier (54) et un second (54') élément support.

2. Système de revêtement selon la revendication précédente, **caractérisé en ce que** ledit élément modulaire comprend un montant (16) pourvu d'un logement de tige, et **en ce qu'**un module photovoltaïque (10) positionné à une extrémité de ladite succession de modules photovoltaïques est couplé à ladite tige (9) au moyen de deux bras (8) dont une première extrémité est couplée à pivotement à ladite tige (9), et une seconde extrémité couplée à pivotement audit module photovoltaïque terminal.

3. Système de revêtement selon l'une quelconque des revendications précédentes, **caractérisé en ce que** chacun desdits modules photovoltaïques (10) est pourvu d'au moins une charnière respective (12) venant en prise de manière coulissante avec ledit premier moyen de guidage (4), et au moins un chariot ou curseur coulissant (6) respectif sur ledit second moyen de guidage (4').

4. Système de revêtement selon l'une quelconque des revendications précédentes, **caractérisé en ce que** chaque module photovoltaïque (10) comprend des moyens de court-circuit (D) de telle sorte qu'un module photovoltaïque obscurci ou endommagé est court-circuité par le courant électrique.

5. Système de revêtement selon l'une quelconque des revendications précédentes, **caractérisé en ce que** lesdits moyens de court-circuit (D) comportent au moins une diode de dérivation.

6. Système de revêtement selon l'une quelconque des revendications précédentes, **caractérisé en ce que** chaque module photovoltaïque (10) comprend des moyens de filtrage d'UV pour permettre le filtrage des rayons UV.

7. Système de revêtement selon l'une quelconque des revendications précédentes, **caractérisé en ce que** ledit premier moyen de guidage (4) comprend un guide à rainure et **en ce que** ledit second moyen de guidage (4') comprend un oeillet.

8. Système de revêtement selon l'une quelconque des revendications 3 à 7, **caractérisé en ce que** chaque curseur (6) est mis en prise par des moyens d'engagement (24) avec un module photovoltaïque (10) respectif.

9. Système de revêtement selon la revendication précédente, **caractérisé en ce que** ledit moyen d'engagement (24) est un moyen de connexion électrique pour permettre le passage du courant électrique d'un module photovoltaïque (10) à au moins un conducteur.

10. Système de revêtement selon l'une quelconque des revendications précédentes, **caractérisé en ce que** lesdits premier (54) et/ou second (54') éléments support est/sont pourvu(s) d'une cavité destinée à loger un ou plusieurs conducteurs.

11. Système de revêtement selon l'une quelconque des revendications 1 à 10, **caractérisé en ce qu'**il comprend au moins un élément modulaire additionnel et **en ce que** le premier (54) ou le second (54') élément support dudit élément modulaire additionnel est couplé respectivement au second (54') ou au premier (54) élément support dudit élément modulaire.

12. Système de revêtement selon l'une quelconque des revendications 1 à 10, **caractérisé en ce que** les premier (54) et/ou second (54') éléments de support dudit élément modulaire est/sont pourvu(s) de moyens de guidage (4', 4) additionnels et **en ce qu'**il comprend au moins un autre élément modulaire couplé en partie inférieure et/ou en partie supérieure audit élément modulaire au moyen desdits moyens de guidage (4', 4) additionnels.

13. Système de revêtement selon l'une quelconque des revendications 2 à 12, **caractérisé en ce qu'**il comprend un autre élément modulaire et **en ce que** le montant (16) dudit élément modulaire est couplé au montant dudit autre élément modulaire.

14. Système de revêtement selon l'une quelconque des revendications 2 à 12, **caractérisé en ce qu'**il comprend un autre élément modulaire et **en ce que** le montant (16) dudit élément modulaire comprend un logement additionnel pour recevoir une tige respective (9) couplée, par l'intermédiaire de deux bras (8), à un module photovoltaïque de terminal dudit élément modulaire additionnel, chacun desdits bras ayant une première extrémité couplée à pivotement à ladite tige (9) et une seconde extrémité couplée à pivotement audit module photovoltaïque de terminal.
